# FASCICULE DE BREVET EUROPEEN

(11) **EP 0 852 869 B1**
(45) Date de publication et mention de la délivrance du brevet: **11.08.2004**
(21) Numéro de dépôt: 96932652.9
(22) Date de dépôt: 25.09.1996
(51) Int. Cl.: H04M 1/274, H04M 11/06, H04Q 1/453

(54) **PROCEDE ET SYSTEME POUR TRANSFERER DES INFORMATIONS ENTRE DEUX P OPULATIONS DE PERSONNES, L'UNE ETANT NOMADE L'AUTRE ETANT SEDENTAIRE**
VERFAHREN UND VORRICHTUNG ZUR INFORMATIONSÜBERTRAGUNG ZWISCHEN NOMADISCHEN UND STATIONÄREN POPULATIONEN
METHOD AND SYSTEM FOR TRANSFERRING DATA BETWEEN A MOBILE AND A STATIONARY GROUP OF PERSONS

(30) Priorité: 25.09.1995 FR 9511413
(43) Date de publication de la demande: 15.07.1998
(73) Titulaire: Audiosmartcard International S.A., 92100 Boulogne Billancourt (FR)
(72) Inventeur: GORETA, Lucas, F-69006 Lyon (FR); DUROUX, Christian, F-75018 Paris (FR)
(74) Mandataire: Vidon, Patrice
(86) Numéro de dépôt international: PCT/FR1996/001499
(87) Numéro de publication internationale: WO 1997/012471

(56) Documents cités:
- EP-A- 0 251 296
- US-A- 4 899 365
- US-A- 4 941 172
- PATENT ABSTRACTS OF JAPAN vol. 14, no. 362 (E-960), 6 Août 1990 & JP,A,02 126756 (SHARP CORP), 15 Mai 1990,

## Description

Le domaine de l'invention est celui du transfert de données via un réseau de communication téléphonique ou informatique.

Plus précisément, l'invention concerne un procédé et un système permettant à deux populations de personnes, l'une étant sédentaire (notamment un prestataire de services à distance) l'autre étant nomade (notamment les clients de ce prestataire de services), d'échanger des données de manière sûre et rapide.

Le problème posé est de permettre à un utilisateur nomade autorisé d'accéder, à distance, aux services offert par les prestataires de services tout en en empêchant un fraudeur de prétendre qu'il est autorisé, qu'il a acquitté les droits correspondants ou qu'il n'a pas demandé les services qui lui sont débités.

Pour résoudre ce problème il a été proposé d'utiliser des clés d'accès que l'utilisateur nomade génère au moyen d'un terminal multimédia ou au moyens d'équipement périphériques à un combiné téléphonique par exemple en insérant une carte à mémoire dans l'équipement périphérique. Ces solutions, outre leur coût, sont peu pratiques et longues à mettre en oeuvre car elles impliquent la mise en place d'équipement périphériques tels que des lecteurs de carte à mémoire. En fait, le problème posé ne peut être effectivement résolu que si on sait résoudre simultanément un autre problème : concevoir un procédé et un système commode d'utilisation, rapide à mettre en oeuvre et économique. En effet, dès lors que l'on s'adresse à un large public, la facilité d'utilisation et les gains de temps deviennent des problèmes majeurs qui ne peuvent pas être écartés. Plus particulièrement, l'attachement des utilisateurs à des produits nomades ayant les dimensions d'une carte de crédit facile à ranger dans un portefeuille ou porte-cartes, implique la conception de procédés et de systèmes mettant en oeuvre des objets nomades ayant ces caractéristiques dimensionnelles.

Ces problèmes sont résolus et ces objectifs sont atteints selon l'invention à l'aide d'un procédé comprenant les étapes suivantes :
- on met à la disposition des personnes de la population nomade des objets portatifs, au format carte de crédit, personnalisés par des identifiants spécifiques pour chaque personne et pour chaque carte,
- on émet au moyen de la dite carte, de brefs signaux acoustiques d'identification, de type DTMF, cryptés au moins en partie, les signaux acoustiques d'identification étant émis par la carte lorsqu'elle est actionnée par la personne qui en dispose
- on reçoit les dits signaux acoustiques d'identification au moyen du microphone d'un équipement téléphonique standard et on traite lesdits signaux au moyen de l'équipement téléphonique standard de manière à ce que le signal résultant puisse être transmis via un réseau téléphonique ou informatique,
- on transmet le signal, via un réseau de communication téléphonique, au service informatique d'une au moins des personnes de la population sédentaire.

II est déjà connu de l'état de la technique d'utiliser des cartes, au format carte de crédit et mises la disposition des utilisateurs par le prestataire de service, qui comportent des moyens d'émission de brefs signaux acoustiques de type DTMF (voir par exemple le document FR-A-2 705 853 ou le document US-A-4 941 172) pour l'appel d'un serveur automatique.

Or les dimensions réduites et le format de la carte, ainsi que les conditions d'utilisation de celles-ci (vieux microphones, mauvais couplage acoustique entre la carte et le microphone, bruit ambiant, température etc.) ne permettent pas dans l'état actuel de la technique d'émettre et de transmettre des signaux acoustiques DTMF ayant une qualité telle que le signal reçu puisse être toujours exploité en l'état par les serveurs vocaux existant dans les services informatiques. La mise en oeuvre d'un objet portatif au format carte de crédit pose donc un problème qui a limité, jusqu'à présent, l'utilisation d'une telle technologie.

Pour surmonter cette difficulté, en combinaison avec les étapes qui viennent d'être décrites, le procédé selon l'invention comprend en outre les étapes suivantes :
- on traite les signaux provenant de la carte, (via le microphone, l'équipement téléphonique standard, le réseau de communication), au moyen d'un logiciel spécifique dont les paramètres sont fonction des caractéristiques de la carte, de ses conditions d'utilisation en combinaison avec le microphone de l'équipement téléphonique, des caractéristiques spécifiques des signaux acoustiques d'identification, des caractéristiques du réseau de communication pour des signaux d'un type particulier correspondant aux données d'identification transmises.

Ainsi grâce à ces moyens de traitement, situés dans l'environnement du prestataire de services, les usagers ont la possibilité d'utiliser des produits nomades au format carte de crédit.

Ainsi après traitement, les signaux provenant de la carte et reçus par les services informatiques contiennent les données que la population nomade souhaite transférer à la population sédentaire.

Le procédé selon l'invention comprend en outre les étapes suivantes :
- on décrypte les signaux et les données obtenues après décryptage sont comparées aux données d'identifications de la carte et de la personne titulaire de la carte, détenues par le service informatique.

Ainsi, grâce à ce procédé, le prestataire de services à l'assurance que l'appelant dispose bien d'une carte authentique et non d'un leurre informatique, par ailleurs il a pu identifier le titulaire de la carte comme étant une personne habilitée à utiliser les services qu'il offre. De sorte qu'après la mise en oeuvre de ce processus d'identification rapide et sûr, les personnes de chacune des deux populations peuvent échanger des données en toute sécurité.

Avantageusement, dans une variante de réalisation, le procédé selon l'invention est tel que pour déterminer les paramètres du logiciel spécifique traitant les signaux provenant de la carte :
- on émet au moyen de la carte un signal acoustique prédéterminé pour correspondre à un signal calibré, notamment en fréquence et en puissance,
- on analyse le signal reçu par le service informatique, en le comparant au signal acoustique calibré,
- on déduit de cette comparaison les paramètres du logiciel de traitement spécifique.

L'invention concerne également un système permettant à deux populations de personnes, l'une étant sédentaire (notamment un prestataire de services à distance) l'autre étant nomade (notamment les clients de ce prestataire de services), d'échanger des données de manière sûre et rapide. Ce système a pour caractéristique de comprendre des moyens de mise en oeuvre du procédé ci-dessus défini et de ses variantes de réalisation.

Plus particulièrement, le système selon l'invention comprend :
- des objets portatifs, mis à la disposition des personnes de la population nomade, les dits objet portatifs étant des cartes au format carte de crédit et personnalisées par des identifiants spécifiques pour chaque personne et pour chaque carte,
- chaque carte comprenant des moyens d'émission de brefs signaux acoustiques d'identification, de type DTMF, cryptés au moins en partie, les signaux acoustiques d'identification étant émis par la carte lorsqu'elle est actionnée par la personne qui en dispose, au moyen d'au moins un élément accessible de l'extérieur de la carte,
- un équipement téléphonique standard comprenant :
   * un microphone contre lequel la personne disposant de la carte accole cette dernière, au moment de l'émission du signal acoustique d'identification,
   * des moyens de traitement standard desdits signaux acoustiques d'identification de manière à ce que le signal d'identification résultant puisse être transmis à distance, via un réseau de communication téléphonique, par des moyens de transmissions,
- un service informatique comprenant des moyens informatiques, à la disposition d'une au moins des personnes de la population sédentaire, connectés au réseau de communication téléphonique et susceptible de recevoir le signal d'identification provenant de l'équipement téléphonique.

Les dimensions réduites et le format de la carte, ainsi que les conditions d'utilisation de celle-ci (vieux microphones, mauvais couplage acoustique entre la carte et le microphone, bruit ambiant, température, etc.) ne permettent pas dans l'état actuel de la technique d'émettre des signaux acoustiques DTMF ayant une qualité telle, que le signal reçu puisse être toujours exploité en l'état par les serveurs vocaux existant dans les services informatiques. Pour surmonter cette difficulté le système selon l'invention est tel que les dits moyens informatiques comprennent en outre :
* des moyens de traitement des signaux provenant de la carte, (via le microphone, l'équipement téléphonique standard, le réseau de communication), comprenant un logiciel spécifique dont les paramètres sont fonction des caractéristiques de la carte, de ses conditions d'utilisation en combinaison avec le microphone de l'équipement téléphonique, des caractéristiques du réseau de communication pour des signaux d'un type particulier correspondant aux données d'identification transmises. De sorte qu'après traitement, les signaux provenant de la carte et reçus par les services informatiques contiennent les données que la population nomade souhaite transférer à la population sédentaire.

Lesdits moyens informatiques comprennent en outre :
* des moyens de décryptage des signaux permettant d'obtenir, à partir de ceux-ci, les identifiants spécifiques de la carte et de la personne titulaire de la carte,
* une base de données contenant les références des cartes et des personnes en disposant et leurs données d'identification,
* des moyens de comparaison des identifiants spécifiques de la carte et de la personne titulaire de la carte avec les données d'identifications de la carte et de la personne titulaire de la carte, contenues dans la base de données. De sorte qu'après la mise en oeuvre de ce processus d'identification, rapide et sûr, les personnes de chacune des deux populations peuvent échanger des données en toute sécurité.

Avantageusement, selon une variante de réalisation. le système selon l'invention est tel que pour déterminer les paramètres du logiciel spécifique traitant les signaux provenant de la carte :
- les moyens d'émission de la carte émettent un signal acoustique prédéterminé pour correspondre à un signal calibré, notamment en fréquence et en puissance,
- les moyens informatiques du service informatique comprennent des moyens d'analyse du signal reçu par le service informatique et de comparaison de celui-ci avec le signal acoustique calibré.

Dans une première variante de réalisation du système selon l'invention, lesdits moyens de traitement des signaux provenant de la carte sont placés en amont des autres moyens composant les moyens informatiques.

Dans une deuxième variante de réalisation du système selon l'invention, lesdits moyens de traitement des signaux provenant de la carte sont placés en ressource des autres moyens composant les moyens informatiques.

Dans une troisième variante de réalisation du système selon l'invention, lesdits moyens de traitement des signaux provenant de la carte sont placés en réseau par rapport aux autres moyens composant les moyens informatiques.
Dans une quatrième variante de réalisation du système selon l'invention, lesdits moyens de traitement des signaux provenant de la carte sont intégrés aux autres moyens composant les moyens informatiques.

D'autres caractéristiques et avantages de l'invention apparaîtront à la lecture de la description de quatre modes de réalisation préférentiels de l'invention, donnés à titre d'exemples indicatifs et non limitatifs, et des dessins annexés dans lesquels :
- la figure 1 présente une vue schématique en perspective du système selon l'invention.
- la figure 2 présente, sous la forme de bloc diagramme, une première variante de réalisation, telle que lesdits moyens de traitement des signaux provenant de la carte sont placés en amont des autres moyens composant les moyens informatiques.
- la figure 3 présente, sous la forme de bloc diagramme, une deuxième variante de réalisation, telle que lesdits moyens de traitement des signaux provenant de la carte sont places en ressource des autres moyens composant les moyens informatiques.
- la figure 4 présente, sous la forme de bloc diagramme, une troisième variante de réalisation, telle que lesdits moyens de traitement des signaux provenant de la carte sont placés en réseau par rapport aux autres moyens composant les moyens informatiques.
- la figure 5 présente, sous la forme de bloc diagramme, une quatrième variante de réalisation, telle que les dits moyens de traitement des signaux provenant de la carte sont intégrés aux autres moyens composant les moyens informatiques.

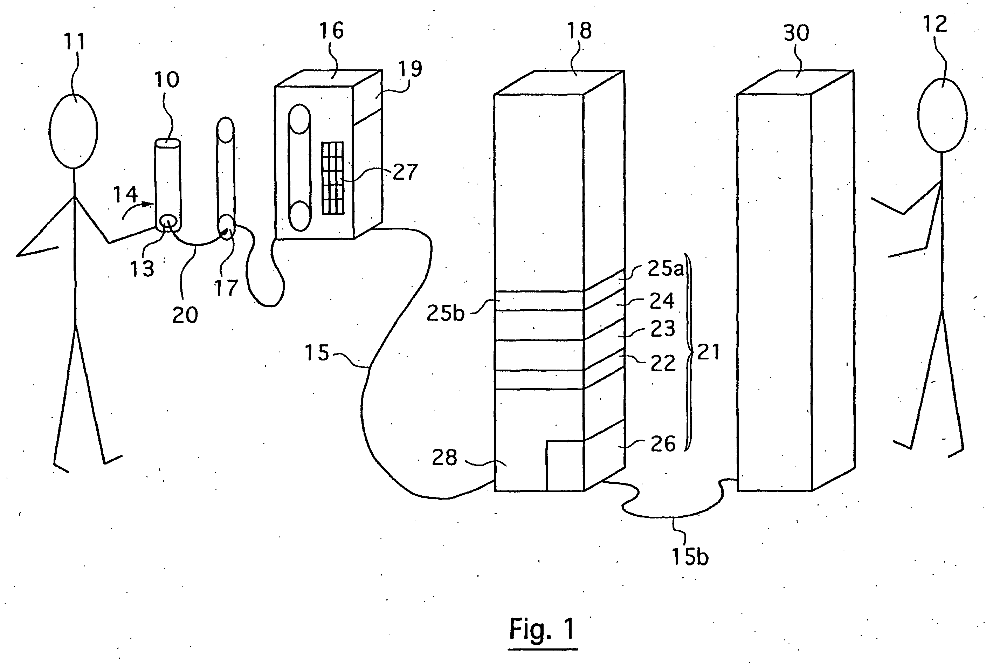

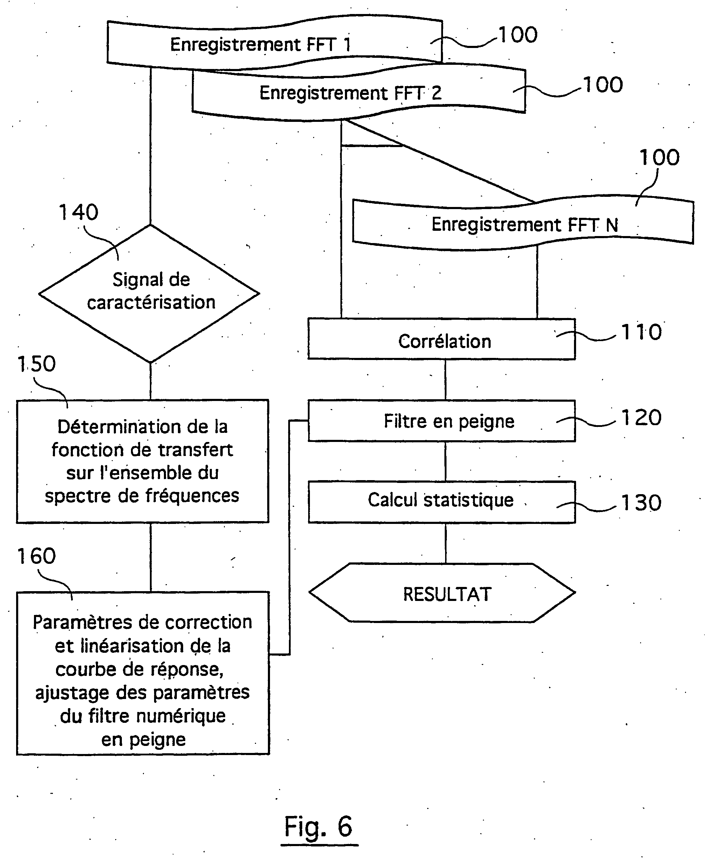

- la figure 6 présente, sous la forme de blocs diagrammes, l'organigramme de traitement. On présente maintenant en relation avec la figure 1 le système et le procédé selon l'invention. Le système et le procédé selon l'invention permettent à chaque personne 11 de la population nomade, utilisant un combiné téléphonique 16 comportant un microphone 17, d'accéder de manière sûre et rapide, aux services 30 que leur offre les personnes 12 de la population sédentaire (le prestataire de services 12). Le combiné téléphonique 16, situé à distance des services informatiques 18 du prestataire de services 12. est connecté au réseau de communication téléphonique 15.
   Lé système comprend une carte 10, au format carte de crédit, personnalisée par des identifiants spécifiques pour chaque carte et pour chaque utilisateur 11. Cette carte est mise à la disposition des utilisateurs par le prestataire de service 12. La carte 10 comporte des moyens d'émission 13 de brefs signaux acoustiques d'identification 20, de type DTMF, cryptés au moins en partie.
   Ces signaux sont émis lorsque les moyens d'émission 13 sont actionnés par l'utilisateur au moyen d'un élément 14 accessible de l'extérieur de la carte (non visible sur la figure car situé sur l'autre côté de la carte). Les signaux acoustiques 20 sont reçus par le microphone 17 du combiné téléphonique, contre lequel l'utilisateur accole la carte 10. Le système comprend également des moyens de transmission 19 des signaux acoustiques 20, situés dans le combiné téléphonique 16. Ces moyens de transmission transmettent à distance les signaux, après traitement, via le réseau de communication 15, à destination des services informatiques 18 du prestataire de services. Les services informatiques, connectés au réseau de communication 15, comprennent des moyens informatiques 21. Les moyens informatiques 21 comprennent,
- des moyens 22 pour actionner lesdits moyens de transmission 19 des équipements téléphoniques 16.
- des moyens de traitement 28 des signaux provenant de la carte, (via le microphone, l'équipement téléphonique standard, le réseau de communication), comprenant un logiciel spécifique 26 dont les paramètres sont fonction des caractéristiques de la carte 10, de ses conditions d'utilisation en combinaison avec le microphone 17 de l'équipement téléphonique 16, des caractéristiques du réseau de communication 15 pour des signaux d'un type particulier correspondant aux données d'identification transmises.

Afin de définir la fonction de transfert de la chaîne de transmission, c'est à dire afin de prendre en compte dans le logiciel spécifique 26 du moyen de traitement de signal 28 :
- la qualité du micro (amortissement, distorsion. bruit de fond),
- les caractéristiques du poste téléphonique (amplification, limitations, filtrages de bande),
- la température ambiante du lieu d'utilisation de la carte (implication sur les fréquences émises par la carte, et les distorsions produites par le micro et la ligne),
- les bruits et la qualité de la ligne elle même,
- les interruptions/coupures, échos qui arrivent fréquemment sur les appels à longue distance, la carte émet un signal acoustique prédéterminé pour correspondre à un signal calibré aux caractéristiques précises, notamment en fréquence et en puissance.

Le signal reçu, en bout de chaîne, par le service informatique, est comparé au signal acoustique calibré prédéterminé selon des caractéristiques précises. Cette comparaison permet aux moyens informatiques 21 de calculer les paramètres du logiciel de traitement spécifique 26. Les principales fonctions de ce logiciel 26 portent sur :
- la linéarisation du signal par rapport aux filtres passe haut et bas,
- le calcul de corrélation de signal pour signaux très amortis et/ou noyés dans le bruit,
- la mesure et la correction des dérives de fréquence liés à la température ambiante d u lieu d'émission et de l'état du dispositif d'émission.
- le filtrage du bruit moyen,
- les corrections d'erreurs,
- l'élimination des échos,
- l'autosynchronisation des signaux,
- la détection et l'interprétation des pulses,
- l'analyse statistique intelligente des signaux : discrimination voix/codes,
- la détection des niveaux d'amplification et/ou de limitation des filtres des combinés téléphoniques, avec reconstitution des parties de signal écrêtées.

Ainsi, grâce à ces moyens de traitement 28 et au logiciel spécifique 26, situés à l'autre extrémité du réseau de communication 15 dans l'environnement du prestataire de services téléphonés, les usagers 11 ont la possibilité d'utiliser des produits nomades 10 au format carte de crédit dont ils ont l'habitude et qu'ils peuvent transporter aisément dans leur portefeuille ou dans leur porte-cartes. De plus ils peuvent utiliser des combinés téléphoniques standard 16 dont environ un milliard d'unités sont disponibles sur la planète.

Les moyens informatiques 21 comprennent également :
* des moyens de décryptage 24 des signaux permettant d'obtenir, à partir de ceux-ci. les identifiants spécifiques de la carte et de la personne titulaire de la carte,
* une base de données 23 contenant les références des cartes et des personnes en disposant et leurs données d'identification,
* des moyens de comparaison 25a des identifiants spécifiques de la carte et de la personne titulaire de la carte avec les données d'identifications de la carte et de la personne titulaire de la carte, contenues dans la base de données.

De sorte qu'après la mise en oeuvre de ce processus d'identification rapide et sûr les personnes de chacune des deux populations peuvent échanger des données en toute sécurité.

De préférence les moyens de cryptage de la carte et de décryptage des services informatiques sont conçus de telle sorte que le signal acoustique varie à chaque opération (horloge, compteur d'opérations etc., ainsi qu'il est notamment décrit dans les brevets US N° : 4,998,279 et US N° : 4,298,098). Ainsi l'enregistrement, sous quelque forme que ce soit, des signaux acoustiques ne sera d'aucune utilité à un fraudeur pour se faire identifier par les services informatiques du prestataire de services et bénéficier des services de celui-ci.

Afin d'augmenter la sécurité du système, dans la variante de réalisation représentée sur la figure 1, le système comprend en outre des seconds moyens de comparaison 25b. Ces moyens de comparaison permettent de comparer un code confidentiel personnel à l'utilisateur contenu dans la base de données avec le code confidentiel émis par l'utilisateur. Ce code est émis au moyen d'un clavier 27 associé au combiné 16 et/ou à la carte 10 et transmis aux moyens informatiques du prestataire, par le réseau de communication 15. Ainsi, le prestataire de services à l'assurance que l'appelant 11 est bien la personne habilitée à entrer en relation avec ses services. Une carte volée ne peut pas être utilisée par le voleur faute de connaître le code confidentiel.

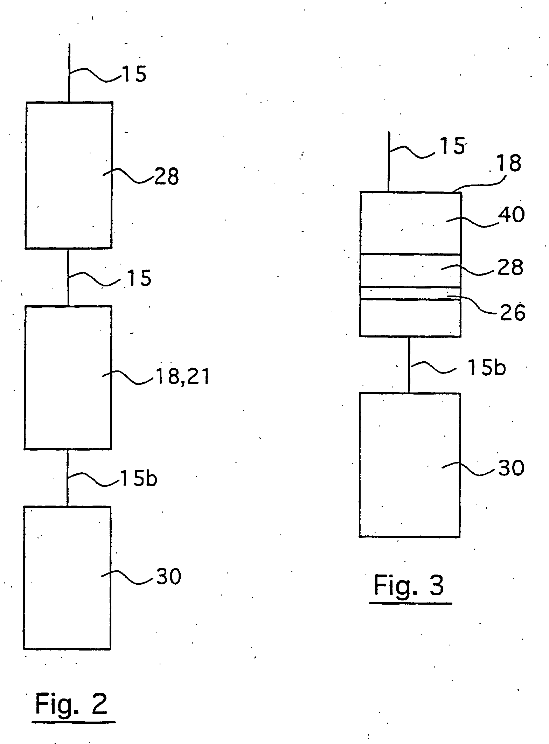

En se référant aux figures 2, 3, 4 et 5 on va maintenant décrire quatre variantes de réalisation des moyens de traitement 28 des signaux provenant de la carte et acheminés par le réseau de communication. On a utilisé les mêmes références sur ces figures pour désigner les organes et les moyens qui ont été décrits en rapport avec la figure 1.

Selon, la première variante de réalisation, représentée sur la figure 2, sous la forme de bloc diagramme, les moyens 28 de traitement des signaux provenant de la carte sont placés en amont des autres moyens composant les moyens informatiques 21 (en frontal du serveur vocal 18, 30). Les signaux acoustiques sont traités par les moyens 28 et restitués après régénération, via la ligne téléphonique, par exemple : sous forme numérique type ASCII ou autre norme utilisable directement par un ordinateur, ou sous forme de signaux DTMF classiques utilisables par le processeur digital de signaux (DSP) du serveur vocal placé en aval. Cette disposition permet de ne modifier aucun élément des moyens informatiques 21 (du serveur vocal placé en aval). Il nécessite, cependant, un nombre de lignes téléphoniques égal en entrée et en sortie des moyens de traitement de signaux 28. Selon, la deuxième variante de réalisation, représentée sur la figure 3, sous la forme de bloc diagramme, les moyens 28 de traitement des signaux provenant de la carte sont placés en ressource des autres moyens composant les moyens informatiques 21 (serveur vocal): Dans ce cas le serveur vocal reçoit les appels, mais utilise les moyens de traitement de signaux 28 en tant que ressource système chaque fois que cela est nécessaire. Cette disposition permet d'utiliser le système de commutation et de gestion 40 des lignes téléphoniques du serveur vocal 18. Le serveur vocal transfère à la ressource un fichier acoustique numérisé de type PCM ou ADPCM. Les moyens de traitement de signaux 28 se présentent sous la forme d'une carte électronique intégrant un calculateur et du logiciel. Dans le cas où le nombre de lignes est faible, les moyens de traitement de signaux 28 sont constitués d'un logiciel, ils renvoient ensuite au serveur vocal 18 un signal du type ASCII ou autre.

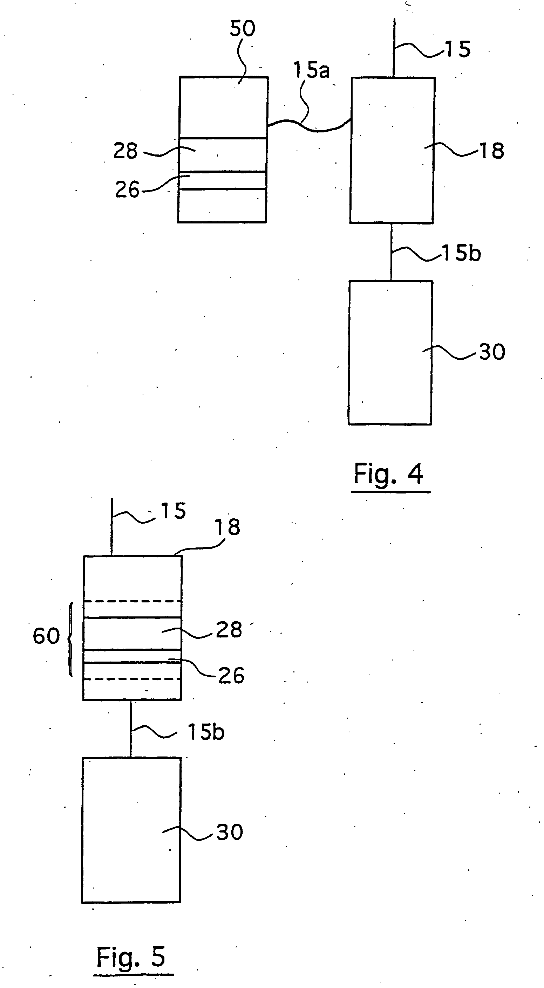

Selon, la troisième variante de réalisation, représentée sur la figure 4, sous la forme de bloc diagramme, les moyens 28 de traitement des signaux provenant de la carte sont placés en réseau par rapport aux autres moyens composant les moyens informatiques 21. Dans certains cas, en effet, notamment en fonction du système d'exploitation utilisé dans le serveur vocal 18, il est impossible de placer les moyens de traitement de signaux en ressource. Dans de tels cas, les moyens de traitement de signaux 28 sont placés en réseau, sur un ordinateur 50. Le fichier vocal numérisé est alors transféré, via le réseau local 15a, et traité par l'ordinateur en réseau incluant les moyens de traitement des signaux 28. Les résultats du traitement effectué par l'ordinateur sont renvoyés au serveur vocal sous forme ASCII ou sous une autre forme, via le réseau local 15a.

Selon, la quatrième variante de réalisation, représentée sur la figure 5, sous la forme de bloc diagramme, les moyens 28 de traitement des signaux provenant de la carte sont intégrés aux autres moyens composant les moyens informatiques 21. Plus précisément ces moyens 28 sont intégrés au processeur digital de signal (DSP) 60 de la carte électronique du serveur vocal 18 avec une logique d'appel aux fonctions de ce DSP spécifique. Il est également possible de remplacer le DSP du serveur vocal par un DSP spécifique intégrant les fonctions des moyens 28 de traitement des signaux.

On va maintenant décrire, en se référant à la figure 6, l'organigramme de traitement des moyens de traitement 28 des signaux. La structure des signaux reçus a des caractéristiques fixes : ensemble des fréquences émises parfaitement défini, temps d'émission de chaque groupe de fréquence, nombre de signaux à recevoir et durée du signal total, signal prédéterminé correspondant au signal de calibrage. Les moyens de traitement des signaux "savent" donc ce qu'ils doivent rechercher. Ils appliquent une fonction de transformée de Fourrier rapide (FFT) glissante par pas variables (FFT 1, FFT 2, ... FFT N) (100) de faibles amplitude permettant (i) d'établir une fonction de corrélation (110), (ii) d'obtenir un réjection du bruit, et (iii) d'observer chaque partie de signal sur plusieurs sections de FFT. A titre d'exemple, le pas de travail pourra être de 5 millisecondes pour un signal unitaire de 20 à 50 millisecondes.

Ensuite, et de manière parallèle, est appliqué un filtrage numérique en peigne (120) dont le nombre d'entrées et les fonctions sont paramétrables. Enfin chaque résultat est comparé et un calcul statistique (130) permet de lever des doutes sur certains signaux. Le signal de caractérisation prédéterminé (140), correspondant au signal calibré, utilise un ensemble de fréquences suffisant par rapport aux fréquences que peut émettre la carte 10. Il est ainsi possible d'obtenir un état des distorsions, amortissements, dérives, énergie, niveaux de bruit et d'échos etc.... de l'ensemble de la chaîne de transmission, et cela sur l'ensemble des fréquences émises. Comme le signal prédéterminé est connu, il n'est pas susceptible d'autres interprétations. Il permet de calibrer les moyens de traitement des signaux et de déterminer la fonction de transfert de la chaîne de transmission ( 150). Les signaux émis par la carte peuvent donc être corrigés (160) par rapport à la courbe de réponse globale du système. Les moyens de traitement 28 des signaux sont ainsi capables de traiter différents types de signaux mono, bi, multifréquences, émis à des vitesses différents et ayant des durées différentes, car il suffit de les programmer en fonction des signaux à détecter (DTMF ou autres).

## Revendications

1. Procédé permettant à deux populations de personnes, l'une étant sédentaire (notamment un prestataire de services à distance (12)) l'autre étant nomade (notamment les clients (11) de ce prestataire de services), d'échanger des données de manière sûre et rapide:
le dit procédé étant **caractérisé en ce qu'**il comprend les étapes suivantes :
- on émet au moyen d'objets nomades au format carte de crédit, personnalisée par des identifiants spécifiques pour chaque personne et pour chaque carte, de brefs signaux acoustiques d'identification (20), de type DTMF, cryptés au moins en partie, les signaux acoustiques d'identification étant émis par la carte lorsqu'elle est actionnée par la personne qui en dispose,
- on reçoit lesdits signaux acoustiques d'identification au moyen du microphone (17) d'un équipement téléphonique standard et on traite lesdits signaux au moyen de l'équipement téléphonique standard (16) de manière à ce que le signal résultant puisse être transmis via un réseau téléphonique ou informatique (15),
- on transmet le signal, via un réseau de communication téléphonique ou informatique, au service informatique (18) d'une au moins des personnes (12) de la population sédentaire,
- on traite les signaux provenant de la carte, (via le microphone, l'équipement téléphonique standard, le réseau de communication), au moyen d'un logiciel spécifique (26) dont les paramètres sont fonction des caractéristiques de la carte, de ses conditions d'utilisation en combinaison avec le microphone de l'équipement téléphonique, des caractéristiques du réseau de communication pour des signaux d'un type particulier correspondant aux données d'identification transmises,
de sorte qu'après traitement, les signaux provenant de la carte et reçus par les services informatiques contiennent les données que la population nomade souhaite transférer à la population sédentaire,
- on décrypte les signaux et les données obtenues après décryptage sont comparées aux données d'identifications de la carte et de la personne titulaire de la carte, détenues par le service informatique,
de sorte qu'après la mise en oeuvre de ce processus d'identification rapide et sûr les personnes de chacune des deux populations peuvent échanger des données en toute sécurité.

2. Procédé selon la revendication 1 **caractérisé en ce que** pour déterminer les paramètres du logiciel spécifique (26) traitant les signaux provenant de la carte :
- on émet au moyen de la carte un signal acoustique prédéterminé pour correspondre à un signal calibré, notamment en fréquence et en puissance,
- on analyse le signal reçu par le service informatique, en le comparant au signal acoustique calibré,
- on déduit de cette comparaison les paramètres du logiciel de traitement spécifique.

3. Système permettant à deux populations de personnes, l'une étant sédentaire (notamment un prestataire de services à distance (12)) l'autre étant nomade (notamment les clients (11) de ce prestataire de services), d'échanger des données de manière sûre et rapide :
ledit système comprenant :
- des objets portatifs (10), mis à la disposition des personnes de la population nomade, lesdits objets portatifs étant au format carte de crédit et personnalisés par des identifiants spécifiques pour chaque personne et pour chaque carte,
- ladite carte comprenant des moyens d'émission de brefs signaux acoustiques d'identification, de type DTMF, cryptés au moins en partie, les signaux acoustiques d'identification (20) étant émis par la carte lorsqu'elle est actionnée par la personne qui en dispose, au moyen d'au moins un élément accessible de l'extérieur de la carte,
- un équipement téléphonique standard (16) comprenant :
* un microphone (17) contre lequel la personne disposant de la carte accole cette dernière, au moment de l'émission du signal acoustique d'identification,
* des moyens de traitement standards des dits signaux acoustiques d'identification de manière à ce que le signal d'identification résultant puisse être transmis à distance, via un réseau de communication téléphonique, par des moyens de transmissions,
- un service informatique (18) comprenant des moyens informatiques (21), à la disposition d'une au moins des personnes de la population sédentaire, connecté au réseau de communication téléphonique et susceptible de recevoir le signal d'identification provenant de l'équipement téléphonique,
- lesdits moyens informatiques (21) comprenant :
* des moyens (28) de traitement des signaux provenant de la carte, (via le microphone, l'équipement téléphonique standard, le réseau de communication), comprenant un logiciel spécifique (26) dont les paramètres sont fonction des caractéristiques de la carte, de ses conditions d'utilisation en combinaison avec le microphone de l'équipement téléphonique, des caractéristiques du réseau de communication pour des signaux d'un type particulier correspondant aux données d'identification transmises,
de sorte qu'après traitement, les signaux provenant de la carte et reçus par les services informatiques contiennent les données que la population nomade souhaite transférer à la population sédentaire,
* des moyens (24) de décryptage des signaux permettant d'obtenir, à partir de ceux-ci, les identifiants spécifiques de la carte et de la personne titulaire de la carte,
* une base de données. (23) contenant les références des cartes et des personnes en disposant et leurs données d'identification,
* des moyens de comparaison (25a) des identifiants spécifiques de la carte et de la personne titulaire de la carte avec les données d'identifications de la carte et
de la personne titulaire de la carte, contenues dans la basé de données de sorte qu'après la mise en oeuvre de ce processus d'identification rapide et sûr les personnes de chacune des deux populations peuvent échanger des données en toute sécurité.

4. Système selon la revendication 3 **caractérisé en ce que** pour déterminer les paramètres du logiciel spécifique (26) traitant les signaux provenant de la carte :
- les moyens d'émission de la carte émettent un signal acoustique prédéterminé pour correspondre à un signal calibré, notamment en fréquence et en puissance,
- les moyens informatiques du service informatique comprennent des moyens d'analyse du signal reçu par le service informatique et de comparaison de celui-ci avec le signal acoustique calibré.

5. Système selon l'une des revendications 3 ou 4 **caractérisé en ce que** lesdits moyens (28) de traitement des signaux provenant de la carte sont placés en amont des autres moyens composant les moyens informatiques.

6. Système selon l'une des revendications 3 ou 4 **caractérisé en ce que** lesdits moyens (28) de traitement des signaux provenant de la carte sont placés en ressource des autres moyens composant les moyens informatiques.

7. Système selon l'une des revendications 3 ou 4 **caractérisé en ce que** lesdits moyens (28) de traitement des signaux provenant de la carte sont placés en réseau par rapport aux autres moyens composant les moyens informatiques.

8. Système selon l'une des revendications 3 ou 4 **caractérisé en ce que** lesdits moyens (28) de traitement des signaux provenant de la carte sont intégrés aux autres moyens composant les moyens informatiques.

9. Système selon l'une des revendications 3 à 8, **caractérisé en ce que** la carte comporte des moyens de cryptage permettant de varier les signaux acoustiques d'une opération à l'autre.

## Patentansprüche

1. Verfahren, mit welchem zwei Personengruppen, von denen die eine stationär (insbesondere ein Lieferant von Ferndienstleistungen (12)) und die andere beweglich (insbesondere die Kunden (11) des besagten Lieferanten von Dienstleistungen) ist, Daten schnell und sicher untereinander austauschen können:
wobei dieses Verfahren durch die folgenden Schritte **gekennzeichnet** ist:
- es werden mittels beweglicher Objekte im Kreditkartenformat, die durch spezifische Identifikationsmerkmale für jede Person und für jede Karte eine persönliche Kennzeichnung erfahren, kurze, mindestens teilweise verschlüsselte, akustische Identifikationssignale (20) des Typs DTMF gesendet, wobei die akustischen Identifikationssignale von der Karte gesendet werden, wenn diese durch die über die besagte Karte verfügende Person betätigt wird,
- die besagten akustischen Identifikationssignale werden über das Mikrophon (17) einer üblichen Telefonanlage empfangen, und die Signale werden so über diese übliche Telefonanlage (16) verarbeitet, dass das sich daraus ergebende Signal über ein Telefon- bzw. EDV-Datennetz (15) gesendet werden kann,
- das Signal wird über ein Telefon- bzw. EDV-Datennetz an den EDV-Dienst bzw. die EDV-Dienststelle (18) von mindestens einer der Personen (12) der stationären Gruppe gesendet,
- die aus der Karte (über das Mikrophon, die übliche Telefoneinrichtung, das Kommunikationsnetzwerk) kommenden Signale werden mit Hilfe einer spezifischen Software (26) verarbeitet, deren Parameter Funktion der Eigenschaften der Karte, ihrer Einsatzbedingungen im Zusammenhang mit dem Mikrophon der Telefonanlage sowie der Eigenschaften des Kommunikationsnetzwerkes für besondere, den übertragenen Identifikationsdaten entsprechenden Signale sind, so dass nach der Verarbeitung, die von der Karte kommenden und vom EDV-Dienst bzw. von der EDV-Dienststelle empfangenen Signale die Daten enthalten, welche die bewegliche Gruppe an die stationäre Gruppe senden möchte,
- die Signale werden entschlüsselt und die so erhaltenen Daten mit den Identifikationsdaten der Karte verglichen, die im Besitz des Datenverarbeitungssystems sind,
so dass nach Ausführung dieses schnellen und sicheren Datenidentifikationsvorgangs, die Personen beider Gruppen in aller Sicherheit Daten untereinander austauschen können.

2. Verfahren nach Anspruch 1, **dadurch gekennzeichnet, dass**, um die Parameter der spezifischen Software (26) zu ermitteln, welche die von der Karte kommenden Signale verarbeitet:
- mit Hilfe der Karte ein vorgegebenes akustisches Signal gesendet wird, um einem kalibrierten Signal insbesondere bezüglich der Frequenz und der Leistung zu entsprechen,
- das vom EDV-Dienst bzw. von der EDV-Dienststelle empfangene Signal durch Vergleich mit dem kalibrierten akustischen Signal analysiert wird,
- aus diesem Vergleich die Parameter der spezifischen Verarbeitungssoftware ermittelt werden.

3. Verfahren, mit welchem zwei Personengruppen, von denen die eine stationär (insbesondere ein Lieferant von Dienstleistungen in die Ferne (12)) und die andere beweglich (insbesondere die Kunden (11) des besagten Lieferanten von Dienstleistungen) ist, Daten schnell und sicher untereinander austauschen können:
wobei dieses Verfahren folgendes umfasst:
- tragbare Objekte (10), die den Personen der beweglichen Gruppe zur Verfügung gestellt werden, wobei diese tragbaren Objekte solche im Kreditkartenformat sind und durch spezifische Identifikationsmerkmale für jede Person und für jede Karte persönlich **gekennzeichnet** sind,
- wobei die Karte über Mittel zum Senden kurzer, zumindest teilweise verschlüsselter akustischer Identifikationssignale vom Typ DTMF verfügt,
wobei diese akustischen Identifikationssignale (20) von der Karte gesendet werden, wenn diese durch die über die besagte Karte verfügende Person mittels mindestens eines von außerhalb zugänglichen Elements der Karte betätigt wird,
- ein Telefonsystem üblicher Art (16), das folgendes umfasst:
* ein Mikrophon (17), gegen das die über die Karte verfügende Person diese Karte hält, wenn das akustische Identifikationssignal gesendet wird,
* Standardmittel zum Verarbeiten der besagten akustischen Identifikationssignale, so dass das so erzeugte Identifikationssignal über ein Telefonnetz oder über andere Verbindungsnetze in die Ferne übertragen werden kann,
- ein EDV-Dienst bzw. eine EDV-Dienststelle (18), die über Mittel zur Datenverarbeitung (21) verfügt, welche mindestens einer der Personen der stationären Gruppe zur Verfügung stehen, mit dem Telefonnetz verbunden sind und das aus der Telefonanlage kommende Identifikationssignal empfangen können,
- wobei diese Mittel zur Datenverarbeitung (21) folgendes umfassen
* Mittel (28) zum Verarbeiten der von der Karte (über das Mikrophon, die übliche Telefonanlage, das Kommunikationsnetzwerk) kommenden Signale, die eine spezifische Software (26) umfassen, deren Parameter von den Karteneigenschaften, von ihren Anwendungsbedingungen im Zusammenhang mit dem Mikrophon der Telefonanlage sowie von den Eigenschaften des Kommunikationsnetzes für Signale einer bestimmten, den übertragenen Identifikationsdaten entsprechenden Art, abhängig sind, so dass nach der Verarbeitung, die von der Karte kommenden und von der Datenverarbeitung empfangenen Signale die Daten enthalten, welche die bewegliche Gruppe an die stationäre Gruppe übertragen möchte,
* Mittel (24) zum Entschlüsseln der Signale, mit denen aus diesen die spezifischen Identifikationsmerkmale der Karte und der sie besitzenden Person ermittelt werden,
* eine Datenbank (23), welche die Referenzen der Karten und der sie besitzenden Personen sowie deren Identifikationsdaten enthält,
* Mittel (25a) zum Vergleichen der spezifischen Identifikationen der Karte und der sie besitzenden Person, mit den in der Datenbank befindlichen Identifikationsdaten der Karte und der sie besitzenden Person, so dass es nach der Durchführung dieses schnellen und sicheren Identifikationsverfahrens den Personen der zwei Gruppen möglich ist, in aller Sicherheit Daten untereinander auszutauschen.

4. System nach Anspruch 3, **dadurch gekennzeichnet, dass** zum Ermitteln der Parameter der die von der Karte gesendeten Signale verarbeitenden, spezifischen Software (26):
- die Sendemittel der Karte ein vorgegebenes akustisches Signal senden, um einem insbesondere nach Frequenz und Leistung kalibrierten Signal zu entsprechen,
- die Datenverarbeitungsmittel des EDV-Dienstes bzw. der EDV-Dienststelle über Mittel zum Analysieren des von dem EDV-Dienst bzw. der EDV-Dienststelle empfangenen Signals sowie zum Vergleich dieses Signals mit dem kalibrierten Akustischen Signal verfügen.

5. System nach einem der Ansprüche 3 oder 4, **dadurch gekennzeichnet, dass** die Verarbeitungsmittel (28) der von der Karte kommenden Signale vor und Datenstromaufwärts der anderen, die EDV-Verarbeitungsmitte bildenden Mittel, angebracht werden.

6. System nach einem der Ansprüche 3 oder 4, **dadurch gekennzeichnet, dass** die Mittel (28) zum Verarbeiten der von der Karte kommenden Signale als Ressource der die EDV-Verarbeitungsmittel bildenden anderen Mittel eingesetzt werden.

7. System nach einem der Ansprüche 3 oder 4, **dadurch gekennzeichnet, dass** die Mittel (28) zum Verarbeiten der von der Karte kommenden Signale als Netzwerk im Verhältnis zu den anderen, die EDV-Mittel bildenden Mittel, angebracht werden.

8. System nach einem der Ansprüche 3 oder 4, **dadurch gekennzeichnet, dass** die Mittel (28) zum Verarbeiten der von der Karte kommenden Signale Bestandteil der anderen, die EDV-Mittel bildenden Mittel, sind.

9. System nach einem der Ansprüche 3 bis 8, **dadurch gekennzeichnet, dass** die Karte über Verschlüsselungsmittel verfügt, mit denen die akustischen Signale von einer Operation zur anderen geändert werden können.

## Claims

1. Method enabling two populations of persons, one being stationary (particularly a remote service provider (12)) and the other being mobile (particularly the clients (11) of this service provider) to exchange data in a secure and speedy manner:
the said method being **characterized in that** it comprises the following steps:
- short acoustic identification signals (20) of the DTMF type, at least partially encrypted, are transmitted by means of mobile objects in credit card format, customized by specific identifiers for each person and for each card, the acoustic identification signals being transmitted by the card when it is activated by the person having it at his disposal,
- the said acoustic identification signals are received by means of the microphone (17) of a standard telephone set and the said signals are processed by means of the standard telephone set (16) in such a way that the resulting signal can be transmitted via a telephone or computer network (15),
- the signal is transmitted, via a telephone or computer network, to the data-processing service (18) of at least one of the persons (12) of the stationary population,
- the signals sent from the card (via the microphone, the standard telephone set and the communications network) are processed by means of special
software (26) whose parameters are functions of the characteristics of the card, its conditions of use in combination with the microphone of the telephone set, and the characteristics of the communications network for signals of a particular type corresponding to the identification data transmitted,
in such a way that, after processing, the signals sent from the card and received by the data-processing services contain the data which the mobile population wishes to transfer to the stationary population,
- the signals are decrypted and the data obtained after decryption are compared with the identification data of the card and of the person holding the card, these data being held by the data-processing service, in such a way that, after the implementation of this speedy and secure identification process, the persons of each of the two populations can exchange data in total security.

2. Method according to Claim 1, **characterized in that**, in order to determine the parameters of the special software (26) processing the signals sent from the card:
- an acoustic signal predetermined to correspond to a calibrated signal, particularly in frequency and in power, is transmitted by means of the card,
- the signal received by the data-processing service is analysed by being compared with the calibrated acoustic signal,
- the parameters of the special processing software are deduced from this comparison.

3. System enabling two populations of persons, one being stationary (particularly a remote service provider (12)) and the other being mobile (particularly the clients (11) of this service provider) to exchange data in a secure and speedy manner:
the said system comprising:
- portable objects (10) placed at the disposal of the persons of the mobile population, the said portable objects being in credit card format and customized by specific identifiers for each person and for each card,
- the said card comprising means of transmitting short acoustic identification signals of the DTMF type, at least partially encrypted, the acoustic identification signals (20) being transmitted by the card when it is activated by the person having it at his disposal, by means of at least one element accessible from the exterior of the card,
- a standard telephone set (16) comprising:
* a microphone (17) against which the person having the card at his disposal places the card when the acoustic identification signal is transmitted,
* standard means for processing the said acoustic identification signals in such a way that the resulting identification signal can be transmitted over a distance, via a telephone communications network, by transmission means,
- a data-processing service (18) comprising data-processing means (21), placed at the disposal of at least one of the persons of the stationary population, connected to the telephone communications network and capable of receiving the identification signal sent from the telephone set,
- the said data-processing means (21) comprising:
* means (28) for processing the signals sent from the card (via the microphone, the standard telephone set and the communications network), comprising special software (26) whose parameters are functions of the characteristics of the card, its conditions of use in combination with the microphone of the telephone set, and the characteristics of the communications network for signals of a particular type corresponding to the identification data transmitted,
in such a way that, after processing, the. signals sent from the card and received by the data-processing services contain the data which the mobile population wishes to transfer to the stationary population,
* means (24) for decrypting the signals, enabling the specific identifiers of the card and of the person holding the card to be obtained from these signals,
* a database (23) containing the references of the cards and to the persons having them at their disposal, and their identification data,
* means (25a) for comparing the specific identifiers of the card and of the person holding the card with the identification data of the card and of the person holding the card contained in the database,
in such a way that, after the implementation of this speedy and secure identification process, the persons of each of the two populations can exchange data in total security.

4. System according to Claim 3, **characterized in that**, in order to determine the parameters of the special software (26) processing the signals sent from the card:
- the transmission means of the card transmit an acoustic signal predetermined to correspond to a calibrated signal, particularly in frequency and in power,
- the data-processing means of the data-processing service comprise means for analysing the signal received by the data-processing service and for comparing this signal with the calibrated acoustic signal.

5. System according to either one of Claims 3 and 4, **characterized in that** the said means (28) for processing the signals sent from the card are placed up-line from the other means forming the data-processing means.

6. System according to either one of Claims 3 and 4, **characterized in that** the said means (28) for processing the signals sent from the card are placed to form a resource for the other means forming the data-processing means.

7. System according to either one of Claims 3 and 4, **characterized in that** the said means (28) for processing the signals sent from the card are placed in a network with respect to the other means forming the data-processing means.

8. System according to either one of Claims 3 and 4, **characterized in that** the said means (28) for processing the signals sent from the card are integrated with the other means forming the data-processing means.

9. System according to one of Claims 3 to 8, **characterized in that** the card comprises encryption means enabling the acoustic signals to be varied from one operation to another.
